# EUROPEAN PATENT APPLICATION

(11) **EP 2 036 760 A1**
(43) Date of publication of application: **18.03.2009**
(21) Application number: 08159974.8
(22) Date of filing: 09.07.2008
(51) Int. Cl.: B60K 26/00, B60W 30/18, B60T 7/08

(54) **Actuating device for a drive pedal of a motor vehicle, particularly for assisting drivers impaired in the use of their legs**

(30) Priority: 17.09.2007 IT TO20070649
(71) Applicant: Kivi S.r.l., 14040 Vigliano (Asti) (IT)
(72) Inventor: Giberti, Giancarlo, 14040, Vigliano (Asti) (IT)
(74) Representative: Notaro, Giancarlo

(57) **Abstract**

An actuating device for a foot pedal of a motor vehicle, in particular of the accelerator pedal (2), comprising an electric motor (6) carried on a support structure (5) which is attached to the pedal (2) in such a way that it may be uncoupled. The electric motor (6) commands the rotation of a pulley (7) on which a flexible cable (8) having a free end anchored to the floor (1) of the motor vehicle is wound. The activation of the electric motor (6) is controlled in a closed ring configuration by an electronic control unit on the basis of the output signal from a sensor that is associated with a manual accelerator manoeuvring element. The device may be used in systems for assisting in driving people impaired in the use of their legs.

## Description

The present invention relates to the field of manual actuation systems for driving motor vehicles, particularly for assisting in driving people impaired in the use of their legs. In particular, the invention relates to an actuator device for a motor vehicle foot pedal, particularly for an accelerator pedal, of the type comprising an electric motor, a pulley fitted on the electric motor output shaft, and a cable that can be wound on the pulley to operate the pedal.

The applicant has been producing and marketing manual actuation systems for driving motor vehicles that can be used by persons impaired in the use of their legs for some time. For example, a system of this type is described and illustrated in the applicant's European patent application EP 1 808 349 A1. In such systems, the driver commands the various functions of the motor vehicle, and in particular the accelerator, by acting on a manoeuvring element adjacent to the steering wheel of the vehicle, for example in the form of a rim concentric with the steering wheel that may be moved manually in the direction of the axis of the steering wheel to command the accelerator. A sensor device, typically in the form of a potentiometer, is included in systems of this type, to measure the shift in the manoeuvring element and to generate an electric signal that is used to command the accelerator. In such cases, the electric signal generated by this sensor is sent directly to the electronic control unit of the engine of the motor vehicle, to control, as a consequence, the accelerator function. However, it must be considered that systems of the aforementioned type are normally applied to motor vehicles originally destined to be driven by non-disabled persons, and thus equipped with normal foot pedals, and in particular, (a normal) accelerator pedal. On the other hand, with the evolution of onboard electronic systems for the latest generation of motor vehicles, it is difficult to adapt the onboard electronic control unit to place it in communication with the positioning sensor associated with the manoeuvring element with which the disabled person controls the accelerator. It is thus necessary in such cases to arrange an electric actuator device that can initiate movement of the accelerator pedal (or of another foot pedal of the motor vehicle) on the basis of the output signal of the positioning sensor associated with the manoeuvring element.

An electrical control device that comprises an electric motor fitted on the frame of the motor vehicle that commands the rotation of a pulley to wind a pedal actuating cable is already known from document US-A-5 603 674. A solution of this type is not totally satisfactory, since the electric motor unit is relatively bulky, and requires adaptation of the floor of the motor vehicle on which it must be mounted, said operation generally being different for each model of motor vehicle on which the device must be installed. This translates into installation operations that are more labour-intensive and costly, as well as involving the installation of a structure of notable bulk on the floor of the passenger compartment of the motor vehicle in a visible position.

In order to obviate the aforementioned disadvantages, the object of the present invention is a device of the type described above, in which said electric motor is supported by a structure attached to the foot pedal of the motor vehicle, and in which the cable that can be wound on the pulley commanded in rotation by the engine has a free end attached to the floor of the motor vehicle. The electric motor is preferably mounted on a structure attached to the foot pedal in such a way that it may be uncoupled.

Thanks to the aforementioned characteristics, the present invention permits the achievement of a series of advantages over the known solution mentioned above. Firstly, only the free end of the actuating cable must be anchored on the floor of the vehicle, and this may be done simply and quickly, irrespective of the shape of the floor of the motor vehicle on which the system is applied. Secondly, the motor unit with the relative support structure may be preassembled easily and simply before installation, and then fitted on the pedal (preferably above it) with a single operation in such a way that it is hidden from sight by the lower part of the dashboard of the motor vehicle. The floor of the vehicle is also free of an annoying bulky element.

The invention will now be described with reference to the enclosed drawings, provided by mere way of nonlimiting example, wherein:
- figure 1 is a schematic perspective view of an accelerator pedal of a motor vehicle equipped with the actuating device according to the invention,
- figure 1A is a block diagram of the control system of the device according to the invention, and figures 2 and 3 are side views of the device shown in figure 1 in two differing working conditions.

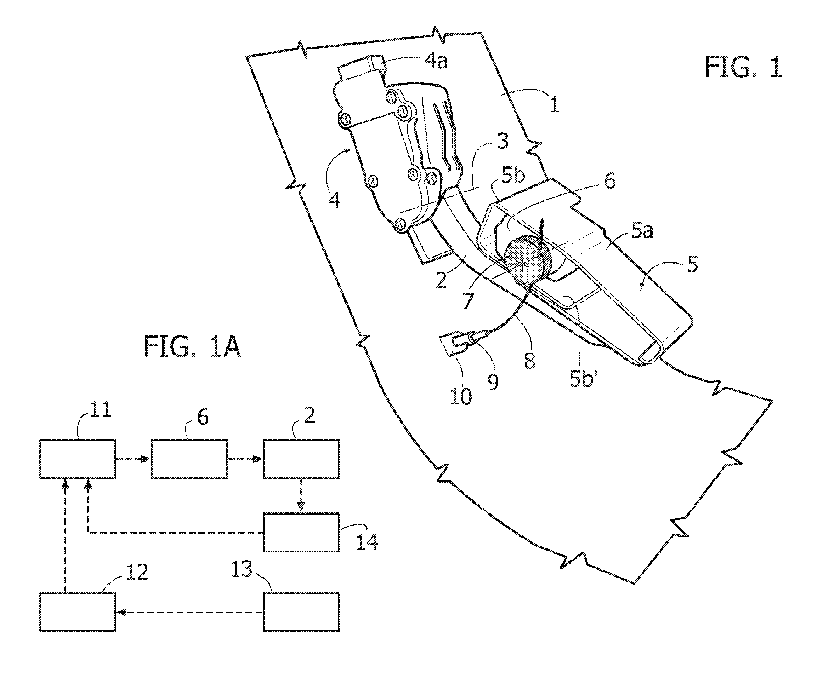

With reference to figure 1, number 1 indicates a portion of the floor of the motor vehicle, while number 2 indicates the motor vehicle accelerator pedal, which is mounted in an articulated way, around an axis 3, on a support structure 4 that is per se of known type. According to a technique that is per se conventional, structure 4 also comprises a sensor that can emit an electric signal that indicates the position of pedal 2.

To this end, support structure 4 includes a connector 4a, destined to be coupled with a wire destined to transmit the output signal of the accelerator pedal positioning sensor to the onboard electronic control unit of the motor vehicle.

Attached to pedal 2 in a way that enables it to be uncoupled, for example, by means of screws (not visible in the drawing), is a support bracket 5 having a substantially bridge-like configuration, with an upper portion 5a that extends in the longitudinal direction of pedal 2, and at a distance from the pedal, and two portions with bent ends, 5b and 5c, each having a C configuration, with a free end flap that is attached by screws to the structure of pedal 2. The structure of an electric motor 6 of any known type is fitted inside the space between flap 5b, protruding from portion 5b and upper portion 5a, the output shaft of which commands the turning of a pulley 77, wound with a flexible metal cable 8, the free end of which is anchored in 9 to a bracket 10 attached in some way to the floor of the motor vehicle (for example welded or screwed). Electrical power and control wires are associated with the electric motor. Activation of the electric motor is controlled by an electronic control unit 11 (visible in figure 1A) on the basis of the electrical signal emitted by a sensor 12 that is associated with manual element 13 that manoeuvres the accelerator, for example a rim element of the type described in European patent EP 1 808 349 of the same applicant. Control unit 11 controls activation of motor 6, which thus induces movement of pedal 2, with the configuration shown in the diagram in figure 1A. A positioning sensor 14 (for example an encoder) to transmit a feedback signal to control unit 11 is associated with electric motor 6 or pedal 2, permitting control of motor 6 using a closed ring configuration. When pedal 2 is pressed it causes activation of the accelerator in the usual way, through the corresponding sensor connected to the onboard control unit. Control unit 11 is preferably a dedicated control unit separate from the control unit of the motor vehicle.

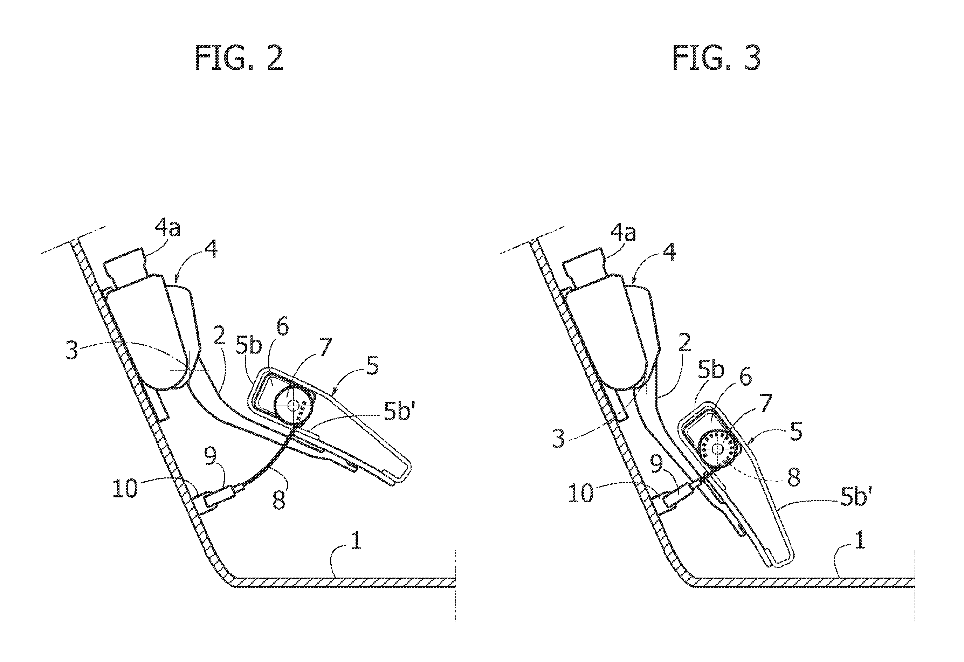

Figures 1 and 2 illustrate the unit in normal rest condition. When the user manually actions the rim element to command the accelerator, the movement of the rim element is detected by the associated sensor and this in consequence causes activation of electric motor 6. Electric motor 6 commands the winding of cable 8 around pulley 7 with consequent movement of the accelerated into a depressed position, as illustrated in figure 3. Naturally, the system includes a closed ring control to stop the electric motor when the pedal reaches a position corresponding to the desired one, set by the driver through rim element 13.

As is evident from the preceding description, the system according to the invention permits the advantage of being easily adaptable to any vehicle floor geometry, since only the free end 9 of flexible cable 8 is attached to the floor. At the same time, electric motor 6 with its support structure 5 may easily be preassembled and then installed with a single operation above the accelerator pedal, without this involving any irritating bulk on the floor, but with the result that the structure of electric motor 6 is not visible, since it is hidden by the lower part of the dashboard of the motor vehicle.

The device according to the invention is preferably equipped, in a way that is per se known, with a security system so that if, for any reason, for example an electronic or mechanical fault, the accelerator should remain on, then acceleration is deactivated as soon as the command (even the manual command) of the brake is touched. Moreover, the device according to the invention does not impede conventional use of the accelerator pedal by a non-disabled person. The system may also be equipped with a switch to switch between the condition in which the manual driving device is activated and the condition in which conventional pedal operation is activated. Finally, although the invention was conceived to be applied primarily to the accelerator or clutch pedal, there is no reason why it could not be applied to the brake pedal.

Obviously, without prejudice to the principles of the invention, construction details and embodiments could widely vary with respect to what has been described and shown by mere way of example, without leaving for this reason the scope of the present invention.

## Claims

1. Actuating device for the drive pedal of a motor vehicle, particularly for driving systems for people impaired in the use of their legs, comprising:
- an electric motor (6),
- a pulley (7) fitted on the output shaft of the electric motor (6), and
- a cable or belt (8) that can be wound on the pulley, to actuate the pedal (2),
**characterised in that** the electric motor (6) is supported by a structure (5) attached to the pedal (2), and that the cable or belt (8) has a free end (9) attached to a bracket (10) anchored on the floor (1) of the motor vehicle.

2. Actuating device according to claim 1,
**characterised in that** structure (5) that supports electric motor (6) is fitted over the pedal (2).

3. Device according to claim 2, **characterised in that** said support structure (5) is attached in such a way that it may be uncoupled from the pedal (2).

4. Device according to claim 1, **characterised in that** the free end (9) of flexible cable (8) is attached in such a way that it may be uncoupled from the floor (1).

5. Device according to claim 1, **characterised in that** the electric motor (6) is associated with an electronic control unit (11) that controls said motor (6) according to a closed ring configuration, on the basis of the output signal of a sensor (12) associated with a manual manoevring element (13) and on the basis of the output signal of a sensor (14) that can directly or indirectly determine the position reached by the pedal (2).

6. Device according to claim 1, **characterised in that** it is installed on the accelerator pedal of a motor vehicle.

7. Device according to claim 1, **characterised in that** it is installed on the clutch pedal of a motor vehicle.

8. Device according to claim 1, **characterised in that** it is installed on the brake pedal of a motor vehicle.
